**Europäisches Patentamt**

**European Patent Office**

**Office européen des brevets**

(11) Publication number : **0 659 932 A2**

# EUROPEAN PATENT APPLICATION

(21) Application number : **94402851.3**

(22) Date of filing : **12.12.94**

(51) Int. Cl.⁶ : **D21B 1/32**

(30) Priority : **13.12.93 US 168262**

(43) Date of publication of application :
**28.06.95 Bulletin 95/26**

(84) Designated Contracting States :
**BE DE ES FR GB IT NL SE**

(71) Applicant : **KIMBERLY-CLARK
CORPORATION
401 North Lake Street
Neenah Wisconsin 54957-0349 (US)**

(72) Inventor : **Kaun, James Martin
N4147 Murphy Road
Kaukauna, Wisconsin 54130 (US)**
Inventor : **Chen, Fung-jou
3216 White Birch Lane
Appleton, Wisconsin 54915 (US)**

(74) Representative : **Sauvage, Renée
Cabinet Sauvage
100 bis, avenue de Saint-Mandé
F-75012 Paris (FR)**

(54) **Method and centrifugal separator for magnetically removing ink particles.**

(57) Ink particles which have been dislodged from wastepaper during aqueous deinking can be concentrated and removed from the aqueous treated fiber suspension (47) by the use of a magnetic field (magnets 45,46). Toner inks commonly used for electrostatic printing are especially suitable for removal by this method.

FIG. 4

## Background of the Invention

Environmental conservation and a need to lower raw material costs have provided an increasing incentive to use recycled deinked fibers for a variety of paper products, including tissue. Of the many kinds of wastepaper available for recycling, paper which has been printed by electrostatic imaging is one of the most common sources of secondary fiber. In electrostatic imaging, the image is formed as an electrostatic pattern on the surface of a drum. A developer (toner) material is applied to the drum and selectively adheres to the charged areas. The adhered toner is then transferred and fixed onto the paper.

Toner formulations are dependent on the type of imaging process that is used. Toners can be in either liquid or dry form and the dry toners can be further categorized as either monocomponent toners or dual-component toners. The monocomponent toners have all of the necessary ingredients blended together as one powder, whereas the dual-component toners have a separate carrier which is blended with the toner formulation during the copying process. The carrier facilitates the transport of the toner material through the copying process and helps meter the proper amount of toner material onto the imaging surface. Carriers can be ferrous, sand, glass or other material.

Dry toner formulations can have some or all of the following ingredients: primary toner resin (also called a binder); secondary toner resin (waxes or polypropylene resins); pigment or colorant, which may be magnetic; charge control agent; and other specialized additives. The primary toner resin is a polymer that provides the bonding of the image to the paper. It has properties that allow it to retain an electrical charge and properly melt at a given temperature or flow under a given pressure. Heat or pressure fuses the resin and pigments together onto the surface of the paper. The primary toner resin comprises from about 35 to about 95 weight percent of the dry toner formulation. The secondary toner resin may comprise from 0 to about 6 weight percent of the toner formulation.

It serves to prevent fused toner particles from adhering to surfaces used to fix the image. Complete release of the image will keep all surfaces clean and allows the best image quality. The pigment or colorant of course provides the necessary color to the printed image. If the pigment is magnetic (ferrous), the pigment can be transported to the imaging drum by a magnetic brush. Various types of ferrous oxides are used. Recent advances in magnetic brush systems for laser printers, ion deposition printers and personal copiers are making magnetic pigments more common. Pigments or colorants can comprise from about 3 to about 60 weight percent of the toner formulation. The charge control agent controls the rate and amount of electric charge on the toner particles and comprises 0 to about 2 weight percent of the toner formulation.

A wide variety of deinking processes are available for recapturing papermaking fibers for reuse and such processes are well known. Typical deinking systems employ a variety of specialized types of equipment. Each is usually directed at the removal of specific particle size ranges. For example, washing is used to remove very small particles (less than about 10 micrometers), flotation removes particles from about 10 to about 100 micrometers, and centrifugal cleaning removes particles from about 50 to about 1000 micrometers. Other factors such as ink particle density or chemical composition may benefit or hinder particle removal. Chemical additives can be added to improve the efficiency of these operations. The specialized nature of this equipment results in high capital and operating costs for deinking systems necessary to provide good quality fiber. The producer of deinked fiber is constantly faced with the decision to employ more expensive technology to process lower quality (lower cost) wastepaper, or to forego the equipment and purchase more expensive and cleaner wastepaper.

Toner ink particles can be particularly troublesome in some deinking operations because of their low removal efficiency and visible size. At times, these small particles can be carried through the deinking process along with the recovered fibers. They ultimately find their way into the final paper product, negatively impacting the visible appearance of the resulting paper product, particularly if the paper product is white.

Therefore there is a need for an improved method of removing small ink particles from aqueous suspensions, particularly removing toner ink particles from aqueous suspensions of secondary fibers.

## Summary of the Invention

It has now been discovered that certain inks, particularly those known in the printing industry as toner inks used for electrographic imaging processes (xerography), can be removed from deinking suspensions by using a magnetic field to attract and concentrate the particles. This is possible because it has been determined that many toner inks contain iron. If the magnetic field is strong enough, these toner inks are sufficiently attracted to the magnetic field to overcome the inherent fluid resistance and interference by the fiber suspension to the migration of the small particles. Once concentrated within the suspension or immobilized on a magnetic surface, the toner ink particles can be easily removed and separated from the deinked fibers.

Hence, in one aspect the invention resides in a method of removing ferrous toner ink particles from an aqueous suspension of deinked papermaking fibers comprising applying a magnetic field to the suspension which is sufficiently strong to attract and concentrate the toner ink particles and thereafter separating the concentrated toner ink particles from the balance of the suspension. The toner ink particles can be of any size and which contain ferrous or other paramagnetic material.

Achieving optimal separation requires an appropriate combination of specific equipment design principles. These principles include a low feedstock consistency, close proximity of fiber suspension flow to the magnetic surface and adequate residence time for particle capture. Low consistency is necessary to minimize the fiber interference and drag on the particle to allow movement towards the magnetic surface. The flow path is preferably designed to achieve a high probability of removal by minimizing the distance from the particle to the region of high magnetic strength. Increasing the probability of ink particle capture is achieved by minimizing the flow channel thickness so that it is completely within the magnetic field and/or inducing random motion within the fluid so that the particle has a high probability of entering the portion of the field that is strong enough to capture the particle. Adequate retention time is necessary so that particles have time to migrate through the fiber slurry to the capture mechanism.

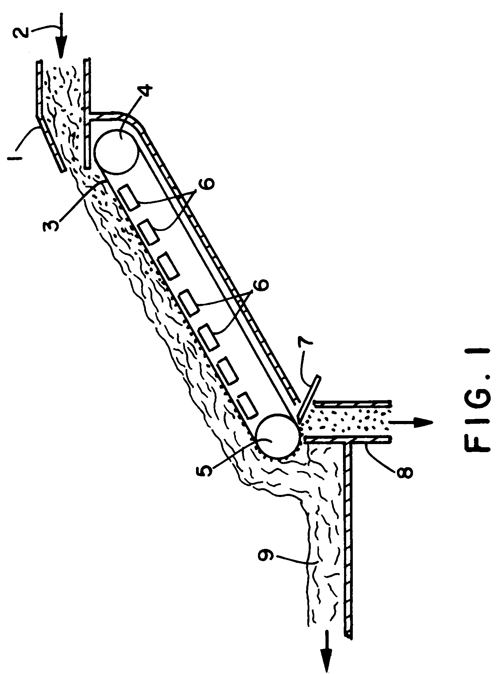

The toner ink particles can be concentrated and separated out of the fiber suspension by many different means. According to one aspect of the invention, the suspension flows downwardly over the surface of an inclined, moving, magnetized endless belt, the toner ink particles being magnetically adhered to the surface of the belt and thereafter removed from the suspension. One example of a suitable apparatus for making such a separation provides for cascading a fiber suspension down an inclined channel lined on the bottom with a magnetized, moving belt as illustrated in Figure 1. The suspension is at the necessary consistency, velocity and thickness to allow the magnetic capture of iron-containing ink particles on the belt. The belt continuously traverses across the bottom of the channel, carrying the particles out of the channel. A doctor blade assembly removes the particles.

According to another aspect of the invention, the suspension is passed through a ferrous trap containing removable magnets and the toner ink particles are magnetically adhered to the surfaces of the magnets. One example of a suitable apparatus is a ferrous trap containing removable magnetic tubes which can be inserted into the flow path of the fiber suspension, causing the ferrous toner particles to become concentrated by adhering to the magnetic tubes as the particles pass by the magnetic tubes. The magnetic tubes are periodically removed from the trap, cleaned and reinserted into the trap housing. The practicality of such a device is dependent on the amount of ink particles being removed from the fiber suspension. If large amounts of ink particles are present, other continuous magnetic removal means are necessary. However, if the amounts needed to be removed are relatively small, as for a clean-up or finishing operation, the ferrous traps are simple and can be effective.

According to a further aspect of the invention, the suspension contacts the surface of a rotating drum, the surface of which is magnetized and partially immersed in the suspension, the toner ink particles becoming magnetically adhered to the drum surface and being thereafter dislodged from the drum surface after it rotates out of the suspension. One example of a suitable apparatus is a rotating drum, the surface of which is partially magnetized while immersed in the fiber suspension. Ink particles are concentrated by adhering to the magnetized surface of the rotating drum and are dislodged from the drum after the surface rotates out of the suspension, such as by continuously scraping the particles off with a doctor blade.

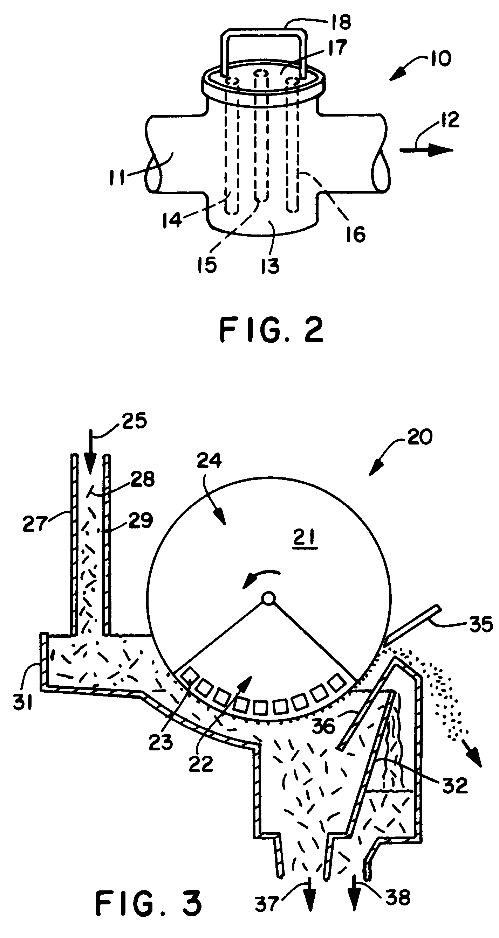

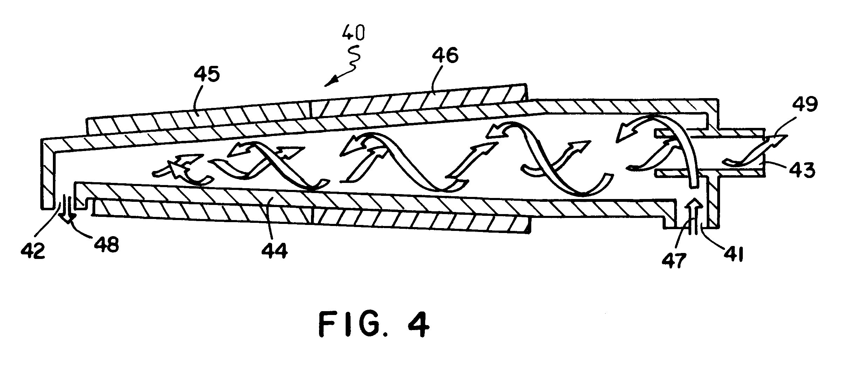

Yet a further example of a means for concentrating and removing the ink particles is a centrifugal separator having a centrifugal outlet for particles which migrate toward the outer wall and an axial outlet for particles which do not migrate toward the outer wall, said separator further having a magnetized outer wall which attracts the ferrous ink particles and causes them to preferentially exit the separator through the centrifugal outlet while the fibers in the suspension preferably exit through the axial outlet of the separator. The term "preferably" is used to mean that the ink or ferrous particles are more concentrated in the fluid passing through the centrifugal outlet as compared to the concentration of the ink particles passing through the axial outlet. The outer wall of the separator can be magnetized by encircling it with one or more magnets as shown in Figure 4, such as an electromagnet, for example. It can also be magnetized or surrounded with a magnetic field using a plurality of bar-shaped magnets positioned around the periphery of the outer wall in a manner similar to that shown in Figure 3 for the rotating drum, except the individual magnets would have to be positioned about the entire outer wall of the centrifugal separator.

The peak magnetic field necessary to attract the ferrous ink particles in the suspension can be at least 500 Gauss, preferably about 7000 Gauss or greater, and suitably from about 4,000 to about 20,000 Gauss. Rare earth magnets are especially suitable for this range of magnetic field strength because of their lower cost relative to an electromagnet. Ceramic magnets can also be used.

The consistency of the suspension (expressed as dry weight percent solids) must be maintained at about 2 percent or lower, preferably about 1 percent or lower, in order to avoid interference and entrapment of the ink particles in the fiber suspension.

The distance of the particles from the magnetic surface will determine the magnetic force exerted on the particles. The force will diminish rapidly as the particle gets further from the surface. A preferred maximum distance between the magnetic surface and the particles in suspension is about 50,8 mm (2 inches) or less. The distance can be greater if adequate mixing and retention time is provided by the equipment design.

These and other aspects of the invention will be further described in connection with the drawing and the examples.

## Brief Description of the Drawing

Figure 1 is a schematic illustration of an apparatus for separating ferrous ink particles from a fiber suspension using an inclined magnetized belt.

Figure 2 is a schematic illustration of a ferrous trap, illustrating the placement of the trap in a flow pipe and the magnetic tubes within the trap.

Figure 3 is a schematic illustration of a magnetic wet drum separator, illustrating the continuous removal of magnetic particles from a fiber suspension.

Figure 4 is a schematic illustration of a magnetized cyclone separator for removing magnetic particles.

Figure 5 is a schematic flow diagram of a deinking process, illustrating several locations where the method of this invention can be used to further remove toner ink particles.

## Detailed Description of the Drawing

Referring to the Drawing, the invention will be described in greater detail.

Figure 1 is a schematic illustration of an apparatus which utilizes an inclined magnetic belt, over which a fiber suspension is cascaded to remove magnetic particles. Shown is a nozzle 1 which delivers a fiber suspension 2 containing magnetic toner ink particles interspersed among the fibers. The nozzle delivers the fiber suspension to the top of an endless travelling belt 3 which travels around rolls 4 and 5 and is pitched at a suitable angle of incline. The belt is magnetized by a plurality of magnets 6 suitably positioned on the underside of the belt. The fiber suspension cascades down over the surface of the belt, which can be travelling concurrently with the direction of flow of the suspension as shown, or the belt can be travelling countercurrently to the direction of flow of the suspension. Either way, the fiber suspension is of the appropriate consistency, thickness (depth) and velocity as previously described to allow capture of the magnetic toner particles by the magnetic field. The magnetic toner particles accumulate on the surface of the belt and are dislodged by a doctor blade 7 or other suitable device. The separated toner particles pass through a rejects outlet 8 while the fiber suspension (accepts) 9 leaves the apparatus as a separate stream. The doctored belt then returns toward roll 4 and a clean surface is presented to the incoming suspension. (If the belt is travelling in the opposite direction, the doctor blade can be positioned against the belt as it passes around roll 4 and the particles can be dislodged and separately collected at that point.)

Figure 2 is a schematic depiction of a ferrous trap 10 which is installed in a flow conduit 11 carrying the aqueous suspension of fibers and ferrous ink particles as indicated by arrow 12. As shown, the trap comprises a housing 13 enclosing a chamber containing multiple magnetic tubes 14, 15 and 16 which are suitably attached endwise to a cover plate 17 having a handle 18. (For purposes of simplifying the illustration, only three magnetic tubes are shown.) The magnetic tubes are preferably positioned in an evenly spaced, staggered array within the chamber to increase the probability of a given particle approaching the surface of the tubes. The cross-sectional area of the chamber occupied by the magnetic tubes is preferably about 50 percent or more, most preferably about 70 percent or more. The spacing between the tubes is preferably about 50,8 mm (2 inches) or less, more preferably about 25,4 mm (1 inch) or less. As the fiber suspension flows through the trap and around the magnetic tubes, ferrous particles are magnetically attracted to the magnetic tubes and become attached thereto. The magnetic tubes can be removed from the trap to clean off the ink particle deposits on their surfaces as needed.

Figure 3 is a schematic illustration of a magnetic wet drum separator 20 also useful for removing ferrous ink particles from an aqueous suspension of fibers and ink particles. Shown is a rotating drum 21 which rotates through a magnetic zone 22 created by a series of fixed magnets 23 which are positioned to attract and hold the ferrous ink particles. The magnetic zone can comprise from about 5° to about 360° of the circumference of the drum. The balance of the rotating drum area 24 is not magnetized. The direction of rotation of the drum can be concurrent or countercurrent relative to the flow of the suspension.

In operation, an aqueous suspension 25 of fibers and ink particles is fed to the separator through an inlet conduit 27. Fibers are depicted by the small lines 28 and the ink particles are depicted by the specks 29. Containment walls 31 and 32 provide a relatively constant liquid level for the suspension. As shown, the surface of the rotating drum rotates in and out of the suspension and continuously presents a clean magnetized surface to the fiber/ink particle suspension. The ink particles become magnetically adhered to the surface of the drum and are thereby continuously carried by the drum surface out of the suspension. After leaving the suspension, the particles are dislodged from the surface of the drum by a doctor blade 35 and removed from the system. The balance of the suspension, substantially free of the ink particles, passes under the weir 36 and on to an appropriate recovery station as indicated by arrows 37 and 38.

Figure 4 is a sectional perspective view of a centrifugal separator 40 which can be used to concentrate and remove toner ink particles or other ferrous particles from the aqueous fiber suspension. Such centrifugal separators rely primarily on centrifugal force and the density difference between the particles and water. By rotating the suspension in a funnel, particles with a specific gravity higher than water will migrate towards the outer wall of the separator and be rejected out the bottom. However, toner ink particles may have an apparent density equal to or less than water because of low resin density and attached air bubbles. The object of the magnetic field is to increase the forces needed to create a favorable "apparent density" for effective separation. The magnets are installed around the circumference and preferably the length of the separator cone. The applied magnetic attraction on the particles is continuous as the particles spiral down through the length of the cone. The combined magnetic and centrifugal forces increase the probability of particles following the outside wall of the separator and being rejected from the separator.

Shown in Figure 4 is a centrifugal separator having: a conically-shaped outer wall 44 which forms an enclosed cone having a wide end and a narrow end; a tangential feed inlet 41 at the wide end of the cone; a centrifugal outlet 42 at the narrow end of the cone; an axial outlet 43 positioned at the wide end of the cone which internally extends toward the narrow end of the cone and is positioned about the axis of the cone; and two annular magnets 45 and 46 which induce a magnetic field inside the cone and essentially magnetize the outer wall. The number of magnets is optional depending on the strength of the magnetic field and the degree of separation desired. The shape of the magnets can vary as well, provided an adequate magnetic field is established to influence the ferrous particles within the separator. As the feed material containing an aqueous suspension of cellulosic fibers and toner ink particles enters the centrifugal separator as depicted by arrow 47, the ink particles are attracted toward the outer wall and concentrated in that zone. Consequently the aqueous suspension 48 removed from the centrifugal outlet is relatively rich in ink particles, whereas the aqueous discharge 49 from the axial outlet is relatively rich in fibers.

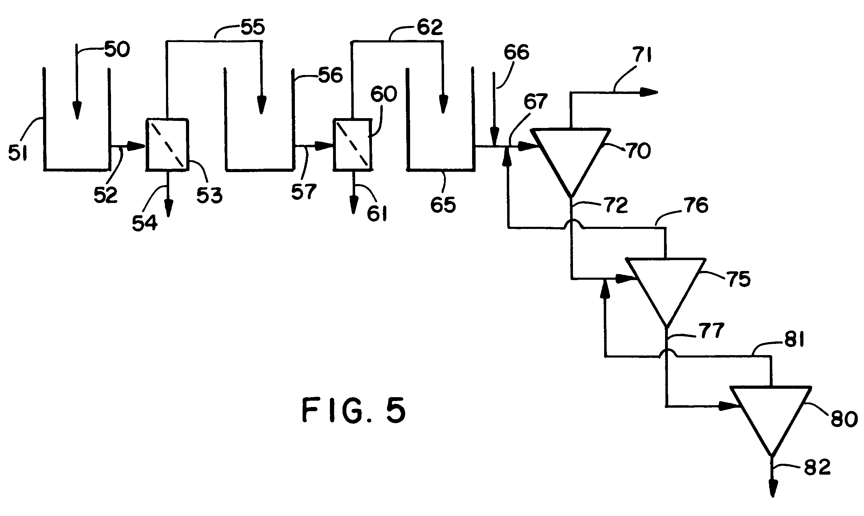

Figure 5 is a schematic flow diagram of a typical wet deinking process which was used to provide feed material for the magnetic deinking Examples which follow. More specifically, feed material 50 containing water, wastepaper and deinking chemicals (optional) was introduced to a pulper 51 which breaks up the wastepaper into an aqueous fibrous slurry or suspension and dislodges ink particles from the fibers. The consistency of the pulper suspension was about 14 percent. The suspension 52, which contained fibers and suspended ink particles, was passed through a coarse screen 53 to remove large contaminants. The screen rejects 54 were disposed. The screen accepts 55 were transferred to a first dump chest 56, which serves as a feed reservoir for the material from the pulper. The suspension 57 was then passed through a fine screen 60 to further separate out solid debris, such as plastics, wood or metals. The screen rejects 61 containing the debris were appropriately discharged, whereas the screen accepts 62 containing fibers, fines and ink particles were passed to a second dump chest 65. At the outlet of the second chest, additional water 66 was added to dilute the fiber suspension to a consistency of about 0.6 weight percent. The resulting suspension 67 was then passed through a cascading system of three hydroclone cleaners (CLEANPAC® 350 hydroclone cleaners, available from Celleco-Hedamora, Inc., Lawrenceville, Georgia, USA) . Specifically, the suspension 67 was fed to a primary cleaner 70. Accepts 71 from the primary cleaner would, in a commercial deinking process, normally be directed to flotation/washing deinking operations as are well known in the deinking field. However, for purposes of illustrating the method of this invention, such further conventional deinking was not performed. Rejects 72 from the primary cleaner were directed to a secondary hydroclone cleaner 75. Accepts 76 were recycled back to the primary cleaner, while rejects 77 were further directed to the tertiary hydroclone cleaner 80. The accepts 81 from the tertiary cleaner were recycled back to the secondary cleaner, while the rejects 82 were directed to appropriate disposal.

The screen accepts 62 (hereinafter referred to as Sample location #1) and the primary cleaner rejects 72 (hereinafter referred to as Sample location #2) were used as feedstocks in the following examples to illustrate the effectiveness of the magnetic deinking method of this invention. However, the method of this invention can also be applied to many other streams within a given deinking process in which there are some residual toner particles mixed with the fibers, including, for example, the accepts streams from the primary, secondary and tertiary cleaners, the accepts streams from subsequent flotation deinking, and/or as a final unit operation after flotation/washing.

Examples

In order to illustrate the benefits of the method of this invention, various wastepaper samples were subjected to a deinking process as illustrated in Figure 5. Samples of the fiber/ink suspensions were taken at three different locations in the deinking process as described above and further subjected to different methods of magnetic deinking as described in the following examples.

Example 1.

In order to illustrate the method of this invention, different waste paper furnishes were subjected to deinking as described above, either with or without chemical agglomeration of the ink particles. In the cases where agglomeration was used, the chemicals consisted of caustic and CDI 549 from Betz Paperchem. The wastepaper furnishes consisted of either Office Waste, or 100% Sorted White Ledger. "Office Waste" consists of the normal daily printing and writing papers discarded in a typical business setting. It may contain printed and unprinted sheets, shavings, cuttings or trim, white and colored, coated and uncoated paper and board. "Sorted White Ledger" (also called "white ledger" or "laser ledger") consists of sheets, shavings, cuttings, or trim of white uncoated paper, electrostatically printed white ledger, electrostatically printed computer printout, or impact computer printout.

In all cases, the sample taken was mixed with water to provide a consistency of about 0.75 weight percent. The sample was placed in a beaker and continually stirred to maintain the solids in suspension. A rare earth bar magnet (Erium® 3000 manufactured by Eriez Magnetics, Erie, Pennsylvania, USA) was immersed into the beaker and, after a brief period of gentle agitation, withdrawn to wash off the accumulated toner which became adhered to the surface of the magnet. This procedure was repeated until there was little visible accumulation on the magnet.

Two handsheets were made from each sample suspension before and after the magnetic treatment. The dirt count in the resulting handsheets was measured and the results from the two handsheets for each before and after sample were averaged. The dirt count was measured using an Optimax Speck Check® scanner (manufactured by Optimax, Hollis, New Hampshire, USA), which measures particles having an equivalent circular diameter greater than 160 micrometers. The attendant software reports the dirt count for each sample in parts per million (ppm) based on the ratio of the area of the dirt on the surface of the handsheet sample to the total area scanned. The results of the laboratory study are summarized and set forth in Table I below. The average handsheet dirt count is reported in parts per million.

TABLE 1

| (Magnetic Removal of Toner Inks) | | | | |
|---|---|---|---|---|
| Furnish Conditions | Sample Location | Average dirt count | | Percent Removed |
| | | Before | After | |
| Office Waste with Agglomeration | 1 | 1579 | 387 | 75.5 |
| | 2 | 6015 | 1081 | 82.0 |
| 100% Sorted White Ledger. No agglomeration | 1 | 1384 | 549 | 60.4 |
| | 2 | 2997 | 681 | 77.3 |
| 100% Sorted White Ledger with Agglomeration | 1 | 1381 | 182 | 86.8 |
| | 2 | 6049 | 971 | 84.0 |

The foregoing results illustrate that toner inks are magnetically responsive and can be removed from aqueous fiber suspensions using magnetic fields. No attempt was made to document the ease of removal or the number of immersions of the magnets needed to remove the toner ink particles. Qualitatively, the samples with agglomeration chemistry had a thicker build-up on the magnets during initial immersions. In all samples, each successive immersion attracted less toner, which indicates particles of varying magnetic responsiveness in the samples.

Example 2.

In order to illustrate the effectiveness of magnetic separation on a continuous basis, removal of toner inks was carried out using a magnetic trap as illustrated in Figure 2. The specific trap used was a Model B-2 Magnetic Trap manufactured by Eriez Magnetics, Erie, Pennsylvania. (This magnetic trap is not specifically designed for deinking, but rather primarily for separating out fine iron, rust or other weakly magnetic material occasionally found in food, cosmetic, printing or lubricant processing.) Sample identification and sample location designations are the same as those used for Example 1. The consistencies of the fiber suspensions varied between 0.73 percent and 1.29 percent depending on the sample location. The flow rate through the magnetic trap was about 7,57-15,14 1 (2-4 gallons) per minute. The results are summarized in TABLE 2 below.

TABLE 2

| (Magnetic Trap) | | | | |
|---|---|---|---|---|
| Furnish Conditions | Sample Location | Average dirt count | | Percent Removed |
| | | Before | After | |
| Office Waste with Agglomeration | 1 | 1922 | 1617 | 16 |
| 100% Sorted White | 1 | 1440 | 1342 | 7 |
| Ledger. No Agglomeration | 2 | 3136 | 2560 | 18 |
| 100% Sorted White | 1 (pass 1) | 1452 | 1227 | 15 |
| Ledger with | (pass 2) | 1227 | 901 | 27 |
| Agglomeration | (pass 3) | 901 | 817 | 9 |
| (3 Passes) | 2 | 5708 | 3656 | 36 |

As the results show, the toner ink particles can be removed from the fiber suspensions on a continuous basis using the magnetic trap. The total removal efficiency using three passes was 44 percent for the third sample of Table 2.

Example 3.

In order to further illustrate continuous removal of toner inks from fiber suspensions, a rare earth magnetic wet drum separator as illustrated in Figure 3 was used to remove the toner inks from several different samples. It should be noted that this particular apparatus was designed for heavy media operations such as coal processing rather than for fine ferrous ink particles. Nevertheless, the apparatus performed well enough to demonstrate the feasibility of the method. The sample identifications and sample locations are the same as those set forth in Examples 1 and 2. The flow rate past the drum was 37,8-56,8 1 (10-15 gallons) per minute. The results are summarized in TABLE 3 below.

## TABLE 3

### (Wet Drum Separator)

| Furnish Conditions | Sample Location | | Consistency | Average Dirt Count | | Percent Removed |
|---|---|---|---|---|---|---|
| | | | | Before | After | |
| 100% Sorted White Ledger* | 1 | | 1.09 | 1452 | 865 | 40 |
| | 1 | (diluted) | 0.54 | 1452 | 802 | 45 |
| | 2 | | 0.76 | 5708 | 3869 | 47 |
| | 2 | (diluted) | 0.34 | 5708 | 2402 | 58 |
| | 2 | (diluted) | 0.34 | 2402 | 1234 | 48 |
| Office Waste* | 1 | | 0.76 | 1922 | 1268 | 34 |

* with agglomeration

As shown, the wet drum separator is also an effective means of removing toner ink particles from the deinked fiber suspensions. Improvements in the removal efficiency were observed at lower consistencies when the feed suspensions were diluted.

It will be appreciated that the foregoing examples, given for purposes of illustration, are not to be construed as limiting the scope of this invention, which is defined by the following claims and all equivalents thereto.

## Claims

1. A method of removing ferrous toner ink particles (29) from an aqueous suspension (2; 25; 47; 50) of deinked papermaking fibers comprising applying a magnetic field to the suspension which is sufficiently strong to attract and concentrate the toner ink particles and thereafter separating the concentrated toner ink particles from the balance of the suspension.

2. The method of Claim 1 wherein the suspension (2) flows downwardly over the surface of an inclined, moving, magnetized endless belt (3), wherein the toner ink particles are magnetically adhered to the surface of the belt and thereafter removed from the suspension.

3. The method of Claim 1 wherein the suspension is passed through a ferrous trap (10) containing removable magnets (14,15,16) and the toner ink particles are magnetically adhered to the surfaces of the magnets.

4. The method of Claim 1 wherein the suspension contacts the surface of a rotating drum (21), the surface of which is magnetized and partially immersed in the suspension (25), wherein the toner ink particles become magnetically adhered to the drum surface and are thereafter dislodged from the drum surface after it rotates out of the suspension.

5. The method of Claim 1 wherein the suspension (47) is passed through a cyclone separator (40) having a centrifugal outlet (42) for particles which migrate toward the outer wall (44) and an axial outlet (43) for particles which do not migrate toward the outer wall, said separator further having a magnetized outer wall (45,46) which attracts the toner ink particles and causes them to preferentially exit the separator through the centrifugal outlet (42) while the fibers preferentially exit the separator through the axial outlet (43).

6. The method of Claim 1 wherein the magnetic field has a strength of about 500 Gauss or greater.

7. The method of Claim 1 wherein the magnetic field has a strength of about 7,000 Gauss or greater.

8. The method of Claim 1 wherein the magnetic field has a strength of from about 4,000 to about 20,000 Gauss.

9. The method of Claim 1 wherein the consistency of the aqueous suspension is about 2 percent or less.

10. The method of Claim 1 wherein the consistency of the aqueous suspension is about 1 percent or less.

11. The method of Claim 1 wherein the deinked fibers are chemically treated to detach and agglomerate the ink particles and the suspension of papermaking fibers further contains agglomerated ink particles.

12. A centrifugal separator (40) for separating or concentrating ferrous solids within a fluid suspension (47) comprising : a conically-shaped outer wall (44) forming an enclosed cone having a wide end and a narrow end ; a tangential inlet (41) in the outer wall (44) at the wide end of the cone ; a centrifugal outlet (42) at the narrow end of the cone ; an axial outlet (43) at the wide end of the cone which is positioned about the axis of the cone and extends internally toward the narrow end of the cone ; and one or more magnets (44,45) which surround the conical outer wall (44) with a magnetic field, wherein fluid entering the tangential inlet (41) spirals toward the narrow end of the cone and flows out of the separator (40) through both outlets (42,43), and wherein ferrous particles suspended in the fluid are attracted toward the outer wall (44) and preferentially pass through the centrifugal outlet (42) at the narrow end of the cone.

FIG. 1

EP 0 659 932 A2

FIG. 2

FIG. 3

FIG. 4

FIG. 5